# EUROPÄISCHE PATENTSCHRIFT

(11) **EP 0 768 236 B1**
(45) Veröffentlichungstag und Bekanntmachung des Hinweises auf die Patenterteilung: **11.08.2004**
(21) Anmeldenummer: 96116170.0
(22) Anmeldetag: 09.10.1996
(51) Int. Cl.: B63G 8/24, B63G 8/22, G05D 1/06, B63B 39/00

(54) **Verfahren und Anordnung zur Seegangsadaption bei einem Seefahrzeug**
Method and system for compensating the control of a vessel for the effects of swell
Méthode et installation pour adapter le contrôle d'un vaisseau à la houle

(30) Priorität: 10.10.1995 DE 19537643
(43) Veröffentlichungstag der Anmeldung: 16.04.1997
(73) Patentinhaber: SIEMENS AKTIENGESELLSCHAFT, 80333 München (DE)
(72) Erfinder: Freund, Harald, 91358 Kunreuth (DE); Singer, Klaus, 91334 Hemhofen (DE); Tröndle, Hans-Peter, Dr., 91301 Forchheim (DE)

(56) Entgegenhaltungen:
- EP-A- 0 339 858
- TRANSACTIONS OF THE INSTITUTE OF MEASUREMENT AND CONTROL, Bd. 13, Nr. 5, 1991, LONDON, Seiten 233-240, XP000276402 W.MARSHFIELD: "Submarine periscope-depth depth-keeping using an H-infinity controller together with sea-noise-reduction notch filters"
- SECOND IEEE CONFERENCE ON CONTROL APPLICATIONS, 13.September 1993, Seiten 953-958, XP000451623 M.GRIMBLE: "Submarine depth and pitch control"

## Beschreibung

Die Erfindung bezieht sich auf ein Verfahren zur Seegangsadaption eines Wasserfahrzeugs nach dem Oberbegriff von Anspruch 1 und auf eine zugehörige Regelanordnung nach dem Oberbegriff von Anspruch 9. Als Wasserfahrzeuge sind dabei insbesondere Tauchfahrzeuge, d.h. ein U-Boot, aber ggfs. auch andere (Über-)Wasserfahrzeuge zu verstehen.

Speziell beim Schweben von U-Booten in geringer Tiefe muß für den praktischen Einsatz auf See die Stellmechanik der zugehörigen Schwebeanlage vor dem Seegangs-Rauschen des Tiefensignals geschützt werden, um den mechanischen Verschleiß insbesondere der Stellorgane in Grenzen zu halten. Aber auch bei anderen Wasserfahrzeugen wäre es wünschenswert, die Regeleinrichtungen mit ihrer Empfindlichkeit entsprechend den äußeren Randbedingungen zu gestalten und insbesondere eine Seegangsadaption vorzusehen.

Das Halten eines getauchten Fahrzeuges in einer angegebenen Tauchtiefe durch Gewichtsausgleich wird allgemein als sogenanntes "Hovering" bezeichnet. Dafür sind Anordnungen zur Schweberegelung notwendig. Allerdings wird üblicherweise die Schweberegelung ohne die abschwächende Wirkung der Seegangsadaption schon bei unbedeutendem Seegang aufgrund der großen Seegangskräfte, die von einem leistungsbegrenzten Stellglied nicht beherrscht werden können, sehr schnell nichtlinear instabil.

Aus der US-PS 3 914 584 ist eine Vorrichtung zur Erfassung von Wellenenergie, insbesondere zur Anzeige des Seeganges bei einem getauchten Unterseeboot vorbekannt. Vom Bediener der Schweberegelung müssen daraus Folgerungen bezüglich Einstellung der Regelparameter gezogen werden. Weiterhin ist aus der DE 68 919 262 T2 (EP 0 339 858) ist ein Autopilotsystem speziell für U-Boote bekannt, bei dem die äußeren Störkräfte, die beispielsweise durch Wellen verursacht sind und eine Wirkung auf die Dynamik des Unterseebootes haben, für die Regelung erfaßt werden können.

Aus der Veröffentlichung "Transactions of the Institute of Measurement and Control", 13/5, Seiten 233 bis 240, 1991, ist es bekannt, bei getauchten Unterwasserfahrzeugen einen sogenannten H∞-Regler einzusetzen, bei dem spezifische Filter, insbesondere sogenannte Kalman-Filter, zur Seegangsadaption verwendet werden. Diese Prinzipien kommen dann zum Einsatz, wenn das getauchte Fahrzeug steigt oder weiter abtaucht, wobei das Tauchsignal ausgewertet wird. Prinzipiell die gleiche Problematik wird in der Veröffentlichung "Second IEEE Confercence on Control Applications", 09.93, Seiten 953 bis 958, angesprochen. Gegenüber diesem Stand der Technik sind die Ansprüche 1 und 9 auch abgegrenzt.

Während sich der Stand der Technik durchweg auf U-Boote bezieht, bei dem für das Tauchen eine spezifische Regelung bereits vorhanden ist, welche auch zum Ausgleich des Seegangs einsetzbar ist, ist es Aufgabe der Erfindung, ein Verfahren und die zugehörige Regelanordnung der eingangs genannten Art zu schaffen, mit denen bei einem Wasserfahrzeug die vorhandenen Resourcen voll genutzt und die Regelparameter den momentanen Seegangskräften entsprechend angepasst werden. Ziel ist es dabei, die Stabilität zu bewahren, ohne dass die Ausregelung von Laststörungen unnötig verlangsamt wird, wie es bei einer normalen Istwertglättung, die auf maximale Störgröße ausgelegt ist, der Fall ist.

Diese Aufgabe erfindungsgemäß durch die kennzeichnenden Merkmale des Anspruchs 1 sowie des nebengeordneten Anspruchs 9 gelöst.

Wesentlich ist bei der Erfindung, dass sie nicht wie beim Stand der Technik speziell für U-Boote einsetzbar ist, sondern in allgemeiner Form immer dann einsetzbar ist, wenn in einem Wasserfahrzeug ein Regelkreis vorhanden ist. Für den genannten Zweck können mechanische Schaltmomente erfasst und hinsichtlich der vorhandenen Unruhe ausgewertet werden. Vorzugweise werden aber elektrische Signale erfasst und hinsichtlich der vorliegenden Unruhe ausgewertet.

In vorzugsweiser Anwendung der Erfindung bei einem Tauchfahrzeug, d. h. einem U-Boot, das bereits eine Schwebeanlage zum sogenannten Hovering enthält, bei der über elektrische Pumpen zum Gewichtsausgleich Seewasser von See in einen ausgewählten Tank und umgekehrt gepumpt wird, werden die elektrischen Pumpenströme erfaßt und hinsichtlich des Wellenspektrums ausgewertet, wobei mit den Auswertesignalen eine Regeleinrichtung adaptiert wird. Insbesondere werden die aus den Pumpenströmen ermittelten Größen zur Adaption der Tiefenregelung herangezogen. Bei der zugehörigen Anordnung zur Durchführung des Verfahrens ist wenigstens ein elektrisches Bandpaßfilter und ein zugehöriger Effektivwertbildner vorhanden. Der Effektivwertbildner besteht aus einem Quadrierer mit nachgeschalteten Einheiten zur Mittelwert- und Wurzelbildung. In einer Vergleichseinheit kann ein Vergleich des Effektivwertes mit einem vorgegebenen Grenzwert der Stellgröße ausgeführt werden. Ist der Seegang größer als der Grenzwert, wird die Tiefenmeßwertglättung gleitend erhöht. Gleichzeitig kann die gesamte Regelung der Schwebeanlage gesteuert adaptiert werden.

Mit der Erfindung wird in vorteilhafter Weise erreicht, daß bei Seegang deren in dessen häufig alles überdeckende, dominierende Wirkung, die zur Instabilität der Regelung führt, einen bestimmenden Einfluß verliert. Dazu wird gegebenenfalls eine verringerte Regeldynamik in Kauf genommen.

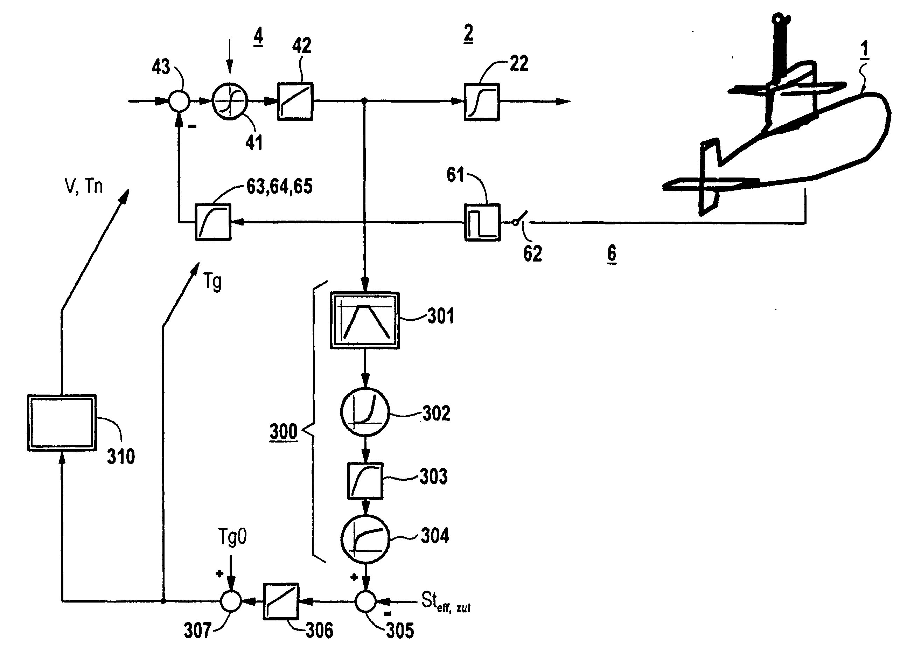

Weitere Einzelheiten und Vorteile der Erfindung ergeben sich aus der nachfolgenden Figurenbeschreibung eines Ausführungsbeispiels anhand der Zeichnung in Verbindung mit weiteren Unteransprüchen. Die einzige Figur zeigt eine Schaltungsanordnung zur Regleradaption an den Seegang.

In der Figur ist ein U-Boot mit 1 bezeichnet, das unter Wasser Schwebevorgänge durchführen soll. Ein solches Schweben wird in der Fachwelt als Hovering bezeichnet, wofür entsprechende Regeleinrichtungen notwendig sind. Mit einer solchen Regeleinrichtung wird insbesondere zum Gewichtsausgleich im Boot Seewasser von See in einen ausgewählten Tank des Bootes und umgekehrt gepumpt, wozu entsprechend ausgebildete Seewasserpumpen mit zugehörigen Regeleinheiten notwendig sind.

Ein geeigneter Regelkreis für eine derartige Pumpe ist in der Figur mit 2 bezeichnet und ist mit einem Geschwindigkeitsregler 4 des U-Bootes 1 und einer Istwerterfassung Teil einer kompletten Regeleinrichtung. Im einzelnen kennzeichnet 22 ein PTₙ-Glied und 41 bzw. 42 die Kombination eines adaptiven Regelgliedes mit einem PI-Regler. Die Istwerterfassung erfolgt über Differenzierer 61, 62 und nachgeschaltete Glättungsfilter 63, 64, 65 auf einen Reglervergleichspunkt 43.

Speziell beim Regeln in geringer Tiefe muß für den praktischen Einsatz auf See die Stellmechanik des U-Bootes, beispielsweise die Seewasserpumpe, vor dem Rauschen des Seeganges geschützt werden. Da das Spektrum des Seeganges bekannt ist, kann die durch den Seegang in der Stellgröße hervorgerufene Unruhe durch eine entsprechende Analyse des elektrischen Pumpenmomentes, insbesondere des Pumpenstromes, erkannt werden. Dazu ist eine Einrichtung 300 vorhanden.

Die Einrichtung 300 besteht insbesondere aus einem auf den Seegang angepaßten Bandpaßfilter 301, dem zur Auswertung ein Effektivwertbildner zugeordnet ist. Letzterer besteht im einzelnen aus einem Quadrierer 302, einer Einheit 303 zur Mittelwertbildung und einem Wurzelbildungs-Glied 304. Der so abgeleitete Effektivwert wird an einem ersten Reglervergleichspunkt 305 mit einem vorgegebenen Grenzwert (Stellgröße_{eff}, _{zul}) verglichen. Nach Verstärkung im Proportionalregler 306 wird im Reglervergleichspunkt 307 die Glättungszeitkonstante zugeführt und eine Zeitkonstante Tg abgeleitet.

Ist der Effektivwert der Seegangsunruhe größer als ein vorgegebener Grenzwert, werden in der Regeleinrichtung für den Schwebevorgang des U-Bootes 1 die Meßwertglättungen 63 bis 65 gleitend erhöht und gleichzeitig die gesamte Regelung des U-Bootes gesteuert adaptiert. Für letzteres ist eine Einheit 310 mit Auslegevorschrift vorhanden, die einen Rechner zur Adaptierung der Regelparameter V, Tn enthält.

Neben dem beschriebenen Beispiel, bei dem speziell durch Analyse der elektrischen Pumpenströme der Seewasserpumpe eine Seegangsadaption der Schweberegelung für U-Boote bewirkt wird, ist im Prinzip durch Analyse beliebiger Stellgrößen das darin jeweils vorhandene Seegangsspekrum erfaßbar. Somit können alle durch den Seegang bewirkten Anteile erhalten werden und für eine Beeinflussung von Steueranlagen üblicher Schiffe verwendet werden.

## Patentansprüche

1. Verfahren zur Seegangsadaption eines Wasserfahrzeugs (1), wobei eine durch den Seegang verursachte, die Stellmechanik eines Regelkreises (2) gefährdende Unruhe erfasst, ausgewertet und dem Regelkreis (2) zur adaptiven Dämpfung seiner Stellgröße aufgeschaltet wird,
**dadurch gekennzeichnet, dass** das Erfassen der Unruhe anhand der Stellgröße des Regelkreises (2) erfolgt.

2. Verfahren nach Anspruch 1,
**dadurch gekennzeichnet, dass** mechanische Schaltmomente erfasst und hinsichtlich der vorhandenen Unruhe ausgewertet werden.

3. Verfahren nach Anspruch 1,
**dadurch gekennzeichnet, dass** elektrische Signale erfasst und hinsichtlich der vorliegenden Unruhe ausgewertet werden.

4. Verfahren nach Anspruch 1, wobei das Schiff (1) ein Tauchfahrzeug (1) ist und eine Schwebeanlage enthält, bei der über elektrische Pumpen zum Gewichtsausgleich Seewasser von See in einen ausgewählten Tank und umgekehrt gepumpt wird,
**dadurch gekennzeichnet, dass** die elektrischen Pumpenströme erfasst und hinsichtlich des Wellenspektrums ausgewertet werden und dem Regelkreis (2) zur adaptiven Dämpfung seines Stellsignals aufgeschaltet werden.

5. Verfahren nach Anspruch 4,
**dadurch gekennzeichnet, dass** die aus den Pumpenströmen ermittelten Größen zur Adaption der Tiefenregelung herangezogen werden.

6. Verfahren nach Anspruch 4 oder 5, **dadurch gekennzeichnet, dass** die in den Pumpenströmen durch den Seegang hervorgerufenen Stromanteile herausgefiltert und der Effektivwert ermittelt wird.

7. Verfahren nach Anspruch 6,
**dadurch gekennzeichnet, dass** die Effektivwertermittlung durch Quadrieren der Signale und anschließende Mittelwertbildung erfolgt.

8. Verfahren nach Anspruch 6 oder 7,
**dadurch gekennzeichnet, dass** der Effektivwert mit vorgebbaren Grenzwerten verglichen und bei Überschreiten des Grenzwertes ein Adaptionssignal für eine Regelungseinrichtung, insbesondere zur Schweberegelung von U-Booten, liefert.

9. Regelanordnung zur Seegangsadaption eines Wasserfahrzeugs (1) zwecks Schützen dessen Stellmechanik vor durch Einwirkung des Seeganges hervorgerufener Unruhe, bei welcher Regelanordnung ein Regler (4), eine Stellmechanik und eine Auswerteeinrichtung (300) derart angeordnet sind
- dass dem Regler (4) ein Istwert und ein Sollwert zugeführt werden,
- dass der Regler (4) anhand des Istwerts und des Sollwerts eine Stellgröße ermittelt und der Stellmechanik zugeführt, und
- dass die Auswerteeinrichtung (300) eine die Stellmechanik gefährdende, durch äußere Einwirkung in der Stellgröße hervorgerufene Unruhe erfasst, auswertet und dem Regler (4) zur adaptiven Dämpfung der Stellgröße aufschaltet,
**dadurch gekennzeichnet, dass** die Auswerteeinrichtung (300) die Unruhe anhand der Stellgröße erfasst.

10. Regelanordnung nach Anspruch 9,
**dadurch gekennzeichnet, dass** sie wenigstens ein elektrisches Bandpassfilter (301) und einen zugehörigen Effektivwertbildner (302 bis 304) aufweist, wobei dem Bandpassfilter (301) die Stellgröße zugeführt wird.

11. Regelanordnung nach Anspruch 10,
**dadurch gekennzeichnet, dass** der Effektivwertbildner aus einem Quadrierer (302) mit nachgeschalteten Einheiten (303, 304) zur Mittelwert- und Wurzelbildung besteht.

12. Regelanordnung nach Anspruch 11,
**dadurch gekennzeichnet, dass** eine Vergleichseinheit (305) zum Vergleich des Effektivwertes mit einem vorgegebenen Grenzwert vorhanden ist.

13. Regelanordnung nach Anspruch 10, 11 oder 12,
**dadurch gekennzeichnet, dass** eine Einheit (310) mit Rechner vorhanden ist, welche nach vorgegebener Auslegevorschrift die Stellgrößen zur Adaption der Regeleinrichtung für die Schweberegelung bestimmt.

14. Wasserfahrzeug, insbesondere U-Boot, mit einer Regelanordnung nach einem der Ansprüche 9 bis 13.

## Claims

1. Method for sea-state adaptation of a watercraft (1), with any unsteadiness which is caused by the sea state and which endangers the control mechanism in a control loop (2) being evaluated and being applied to the control loop (2) for adaptive damping of its manipulated variable,
**characterized in that** the unsteadiness is detected on the basis of the manipulated variable in the control loop (2).

2. Method according to Claim 1,
**characterized in that** mechanical switching moments are detected and are evaluated for the existence of unsteadiness.

3. Method according to Claim 1,
**characterized in that** electrical signals are detected and are evaluated for the existence of unsteadiness.

4. Method according to Claim 1, with the vessel (1) being a diving vessel (1) and containing a buoyancy system, in which sea water is pumped from the sea into a selected tank, and vice versa, by means of electric pumps in order to provide weight compensation,
**characterized in that** the electric pump currents are detected and their wave spectrum is evaluated, and are applied to the control loop (2) for adaptive damping of its control signal.

5. Method according to Claim 4,
**characterized in that** the variables which are determined from the pump currents are used for adaptation of the depth control.

6. Method according to Claim 4 or 5,
**characterized in that** the current components in the pump currents which are caused by the sea state are filtered out, and the root mean square value is determined.

7. Method according to Claim 6,
**characterized in that** the root mean square value is determined by squaring the signal and by subsequently forming the average value.

8. Method according to Claim 6 or 7,
**characterized in that** the root mean square value is compared with limit values which can be predetermined and, if the limit value is exceeded, an adaptation signal is produced for a control device, in particular in order to control the buoyancy of submarines.

9. Control arrangement for sea-state adaptation of a watercraft (1) in order to protect its control mechanism against unsteadiness caused by the influence of the sea state, in which control arrangement a regulator (4), a control mechanism and an evaluation device (300) are arranged in such a way
- that the regulator (4) is supplied with an actual value and a set value,
- that the regulator (4) uses the actual value and the set value to determine a manipulated variable, and supplies this to the control mechanism, and
- that the evaluation device (300) detects any unsteadiness which endangers the control mechanism and is caused by an external influence on the manipulated variable, evaluates it, and applies it to the regulator (4) for adaptive damping of the manipulated variable,
**characterized in that** the evaluation device (300) detects the unsteadiness on the basis of the manipulated variable.

10. Control arrangement according to Claim 9,
**characterized in that** the control arrangement has at least one electrical bandpass filter (301) and an associated device for forming the root mean square value (302 to 304), with the manipulated variable being supplied to the bandpass filter (301).

11. Control arrangement according to Claim 10,
**characterized in that** the device for forming the root mean square value comprises a squaring device (302) with downstream units (303, 304) for forming the mean value and the square root.

12. Control arrangement according to Claim 11,
**characterized in that** a comparison unit (305) is provided in order to compare the root mean square value with a predetermined limit value.

13. Control arrangement according to Claim 10, 11 or 12,
**characterized in that** a unit (310) with a computer is provided, and determines the manipulated variables for adaptation at the control device for buoyancy control in accordance with a predetermined configuration rule.

14. Watercraft, in particular a submarine, having a control arrangement according to one of Claims 9 to 13.

## Revendications

1. Procédé d'adaptation à la houle d'un engin nautique (1), dans lequel les perturbations, générées par la houle et compromettant la mécanique d'asservissement d'un circuit d'asservissement (2), sont mesurées, traitées et renvoyées au circuit d'asservissement (2) pour amortir de façon adaptative sa grandeur d'asservissement,
**caractérisé en ce que** la mesure des perturbations est effectuée en se référant à la grandeur d'asservissement du circuit d'asservissement (2).

2. Procédé selon la revendication 1, **caractérisé en ce que** des couples mécaniques sont mesurés et traités en vue des perturbations existantes.

3. Procédé selon la revendication 1, **caractérisé en ce que** des signaux électriques sont acquis et traités en vue des perturbations existantes.

4. Procédé selon la revendication 1, dans lequel le navire (1) est un engin submersible (1) et contient une installation de sustentation dans laquelle de l'eau de mer est pompée par des pompes électriques pour être amenée dans un ballast choisi, et inversement, afin d'effectuer un équilibrage en poids,
**caractérisé en ce que** les courants électriques de la pompe sont mesurés et traités en vue du spectre de la houle et sont renvoyés au circuit d'asservissement (2) pour amortir de façon adaptative son signal d'asservissement.

5. Procédé selon la revendication 4, **caractérisé en ce que** des grandeurs déterminées à partir des courants de pompe sont utilisées pour l'adaptation de l'asservissement en profondeur.

6. Procédé selon la revendication 4 ou 5, **caractérisé en ce que** la portion de courant utilisée dans les courants de pompe à cause de la houle est éliminée par filtrage et la valeur efficace est déterminée.

7. Procédé selon la revendication 6, **caractérisé en ce que** la détermination de la valeur efficace est effectuée en élevant au carré les signaux et en générant ensuite la valeur moyenne.

8. Procédé selon la revendication 6 ou 7, **caractérisé en ce que** la valeur efficace est comparée à des valeurs limites prédéterminées et, en cas de dépassement par le haut de la valeur limite, un signal d'adaptation est délivré à un dispositif d'asservissement, en particulier un asservissement de sustentation de sous-marins.

9. Dispositif d'asservissement destiné à l'adaptation à la houle d'un engin nautique (1) en vue de protéger sa mécanique d'asservissement contre des perturbations générées par la houle, dans lequel se trouvent un asservissement (4), une mécanique d'asservissement et un dispositif de traitement (300),
- une valeur réelle et une valeur de consigne étant amenées à l'asservissement (4),
- l'asservissement (4) déterminant à partir de la valeur réelle et de la valeur de consigne une grandeur d'asservissement qui est amené à la mécanique d'asservissement,
- le dispositif de traitement (300) déterminant des perturbations générées dans la grandeur d'asservissement par des influences extérieures et compromettant la mécanique d'asservissement, traite ces perturbations et les renvoient à l'asservissement (4) afin d'amortir de façon adaptative la grandeur d'asservissement,
**caractérisé en ce que** le dispositif de traitement (300) détermine des perturbations au moyen de la grandeur d'asservissement.

10. Dispositif d'asservissement selon la revendication 9, **caractérisé en ce qu'**il comporte au moins un filtre passe-bande électrique (301) et un générateur de valeurs efficaces associé (301 à 304), la grandeur d'asservissement étant amenée au filtre passe-bande (301).

11. Dispositif d'asservissement selon la revendication 10, **caractérisé en ce que** le générateur de valeurs efficaces est constitué d'un élévateur au carré (302) et d'unités (303, 304), montées en aval, de génération de valeurs moyennes et d'extraction de racine.

12. Dispositif d'asservissement selon la revendication 11, **caractérisé en ce qu'**une unité de comparaison (305) est prévue pour comparer la valeur efficace avec une valeur limite prédéterminée.

13. Dispositif d'asservissement selon la revendication 10, 11 ou 12, **caractérisé en ce qu'**il est prévu une unité (310) dotée d'un calculateur, laquelle détermine les grandeurs d'asservissement à partir d'une règle d'interprétation en vue de l'adaptation du dispositif d'asservissement pour l'asservissement en sustentation.

14. Engin nautique, en particulier sous-marin, comportant un dispositif d'asservissement selon l'une des revendications 9 à 13.
